# EUROPÄISCHE PATENTSCHRIFT

(11) **EP 0 503 258 B1**
(45) Veröffentlichungstag und Bekanntmachung des Hinweises auf die Patenterteilung: **16.08.1995**
(21) Anmeldenummer: 92101512.9
(22) Anmeldetag: 30.01.1992
(51) Int. Cl.: F16L 21/03, F16L 21/02

(54) **Verbindungsanordnung einer Rohrleitung**
Pipe line connection arrangement
Dispositif de connexion d'un conduit de tuyaux

(30) Priorität: 14.03.1991 DE 4108199
(43) Veröffentlichungstag der Anmeldung: 16.09.1992
(73) Patentinhaber: Friatec Aktiengesellschaft Keramik- und Kunststoffwerke, D-68229 Mannheim (DE)
(72) Erfinder: Bläss, Jürgen, W-6805 Heddesheim (DE)
(74) Vertreter: Klose, Hans, Dipl.-Phys.

(56) Entgegenhaltungen:
- AT-B- 392 146
- DD-A- 105 045
- DE-A- 2 731 749
- DE-A- 3 822 159
- DE-C- 3 906 967
- GB-A- 1 158 358
- US-A- 3 165 324

## Beschreibung

Die Erfindung bezieht sich auf die Verwendung einer Verbindungsanordnung einer Rohrleitung gemäß den im Oberbegriff des Patentanspruchs 1 angegebenen Merkmalen.

Aus der AT 392 146 B ist eine derartige Verbindungsanordnung einer Rohrleitung bekannt, welche aus Rohrteilen eines einzigen Rohrsystems aufgebaut ist. In eine Sicke einer Muffe ist ein ringförmiges Dichtelement angeordnet, welches mit einer vergleichsweise schmalen und in axialer Richtung sich erstreckenden Schürze verbunden ist. Für diese ringförmige Schürze ist unmittelbar neben der Sicke noch eine zusätzliche Abstufung vorgesehen. Mittels dieser Schürze soll die Dichtwirkung des in der Sicke angeordneten Dichtelements verbessert werden, wobei dessen Dichtlippen sowie die Dichtlippen der Schürze an der Außenfläche des in die Muffe eingeschobenen Rohrteils bzw. Rohrendes anliegen. Durch die Dichtlippen der Schürze wird der Einschubwiderstand des Rohrteils bei der Montage erhöht. Es besteht die Gefahr, daß die Schürze in den Bereich des Innenteils der Muffe gequetscht wird und/oder das Dichtelement aus der Sicke herausgerissen wird. Die Geometrie der Muffe mit der genannten zusätzlichen Ausnehmung weicht von den Muffenformen heute üblicher Rohrsysteme ab und erfordert einen entsprechend erhöhten Fertigungsaufwand. Durch die genannte Ausnehmung für die in axialer Richtung sich erstreckende Schürze wird die Gesamtlänge der Muffe wesentlich erhöht und insgesamt ist ein hoher Materialeinsatz gegeben. In dem Innenteil der Muffe, welcher axial an die genannte Ausnehmung in Richtung zum Muffengrund hin anschließt, liegt das Spitzende des eingeschobenen Rohrteiles an der Muffeninnenfläche praktisch an. Zwischen der genannten Muffeninnenfläche und der Außenfläche des Rohrteils ist lediglich ein kleiner Spalt vorhanden, damit im Hinblick auf Fertigungstoleranzen das Spitzende eines derartigen Rohrsystems in die Muffe problemlos eingeführt werden kann. Durch die möglichst geringe Spaltbreite soll ein Parallelversatz oder Winkelversatz der miteinander verbundenen Rohrteile möglichst klein gehalten werden. Bei der vorbekannten Verbindungsanordnung ist die axiale Länge des genannten Innenteils im wesentlichen gleich groß wie die axiale Länge der Ausnehmung der Sicke sowie des in Richtung zur Muffenöffnung sich anschließenden vorderen Muffenteiles. Es handelt sich hier um eine Spezialmuffe mit einer unmittelbar neben der Sicke vorgesehenen Ausnehmung für die genannte Schürze des Dichtringes.

Ferner ist aus der DE 39 06 967 C1 ein Dichtring bekannt, welcher ausschließlich in die Sicke der Muffe in bekannter Weise eingesetzt ist. Die Abmessungen entsprechender aus Kunststoff gefertigter Rohre sind insbesondere in den Normen DIN 19 560 oder 19 561 festgelegt, wobei in Abhängigkeit der jeweiligen Nennweite DN insbesondere Außendurchmesser, Innendurchmesser des Rohres, der Muffe und der Sicke inklusive Toleranzen angegeben sind. Die Norm DIN 19 561 gilt für Formteile und Rohre aus Styrol-Copolymerisaten, welche klebbar sind. Desweiteren gilt die Norm DIN 16 891 für Formteile und Rohre aus Polypropylen, welche nicht klebbar sind. In den letzten Jahren gewinnen die Forderungen nach schallgedämmten Abwasser-Rohrsystemen in Gebäuden immer größere Bedeutung. Im Hinblick auf die Schallschutz-Anforderungen sind daher heute auch Rohrsysteme auf dem Markt, welche eine im Vergleich zu den bisher genormten Rohren größere Wanddicken aufweisen. Geht man bei derartigen verdickten Rohren von einer lichten Nennweite gemäß den Normen aus, so ist beispielsweise für DN 70 bzw. DN 125 mit einem vergrößerten Außendurchmesser von 3 bzw. 10 mm zu rechnen. Für den Übergang zwischen den genormten Rohren und dickwandigen, schallgedämmten Kunststoffrohren wurden daher besondere Übergangsstücke oder Formteile mit entsprechenden Abgängen bzw. Anschlüssen entwickelt. In der Praxis erweisen sich derartige Formteile oder Übergangsstücke als nachteilig, da hierdurch das Einbaumaß verlängert wird, und zwar im wesentlichen um die Länge einer Muffe. Grundsätzlich ist es natürlich auch denkbar, die Formteile, wie Abzweige, Winkel oder dergleichen, als Übergangsstücke selbst auszubilden, sodaß beispielsweise das Spitzende den Abmessungen des schallgedämmten, dickeren Rohres entspricht und die Muffe die genormten Abmessungen aufweist. Mit derartigen Übergangsstücken könnte zwar das Problem des Einbaumaßes gelöst werden, doch erfordern sie einen hohen Kostenaufwand, da sie in vergleichsweise niedrigen Stückzahlen gefertigt werden müßten und zudem die Disposition verschiedenartiger Teile die Lagerkapazität nachteilig beeinflussen würden. Schließlich kann auch nicht außer Acht gelassen werden, daß mangels geeigneter Übergangs- und Formteile in der Praxis auf der Baustelle sehr leicht zu Verzögerungen bei der Verlegung, Reparaturmaßnahmen usw. kommen kann.

Hiervon ausgehend liegt der Erfindung die Aufgabe zugrunde, die Verbindungsanordnung dahingehend auszubilden, daß mit geringem Fertigungs- und Materialaufwand der Übergang zwischen unterschiedlichen Rohrsystemen funktionssicher abgedichtet wird. Eine Verlängerung im Verbindungsbereich soll bei funktionssicherer Abdichtung vermieden werden. Die Gefahr von Montagefehlern oder gar unzureichender Abdichtung soll vermieden werden und desweiteren soll der Material- und Lagerhaltungsaufwand auf ein Minimum eingeschränkt werden.

Die Lösung dieser Aufgabe erfolgt nach den im kennzeichnenden Teil des Patentanspruchs 1 angegebenen Merkmalen.

Die erfindungsgemäße Verbindungsanordnung zeichnet sich durch eine funktionssichere Konstruktion aus und ermöglicht ohne besondere Probleme die Abdichtung im Übergangsbereich zwischen Rohren oder Formteilen von Systemen mit unterschiedlichen Abmessungen. Mittels der zylindrischen Schürze wird in zweckmäßiger Weise der Spalt zwischen der Außenfläche des Spitzendes des genormten Rohres und der Innenfläche der Muffe mit vergrößerten Abmessungen überbrückt und ein fluchtgerechter Einbau gewährleistet. Die Schürze enthält keine Dichtlippen, sondern lediglich zum Toleranzausgleich von ihren zylindrischen Flächen abstehende Wulste, welche praktisch keinen nachteiligen Einfluß auf den Einschubwiderstand haben. Eine zusätzliche Ausnehmung neben der Sicke ist nicht vorhanden und eine Vergrößerung der Muffenlänge ist nicht erforderlich. Die Muffe besteht aus dem an die Muffenöffnung anschließenden Vorderteil, der Sicke sowie einem sich zum Muffengrund hin direkt anschließenden Innenteil. Die Schürze ist in dem Spalt zwischen dem Innenteil der Muffe und dem eingeschobenen Rohrende angeordnet und weist im wesentlichen die gleiche Länge auf wie der genannte Innenteil der Muffe. Der die Schürze des Dichtringes aufnehmende ringförmige Spalt zwischen dem Innenteil der Muffe und dem eingeschobenen Rohrteil weist eine radiale Breite auf, welche im wesentlichen überstimmt mit der Spaltbreite zwischen dem Muffenvorderteil und dem eingeschobenen Rohrteil. Der äußere Teil des in der Sicke angeordneten Dichtringes ist auf den dort vergrößerten Innendurchmesser des zweiten Rohrsystems abgestimmt.

Es sei festgehalten, daß sowohl für das System mit genormten Rohren als auch für das System mit schallgedämmten Rohren jeweils die erforderlichen Dichtringe zur Verfügung stehen, welche eine optimale Abdichtung gewährleisten. Wollte man versuchen, einen Dichtring des einen Systems für den Übergangsbereich zwischen dem einen und dem anderen System vorzusehen, so ist die Dichtwirkung nicht gewährleistet bzw. könnten bei der Montage Probleme oder gar Beschädigungen auftreten. Aufgrund der Schürze wird das versehentliche Einlegen eines zu großen oder zu kleinen Dichtringes auch unter Berücksichtigung der Erfordernisse der Praxis unterbunden, denn ein Monteur wird für den Übergang zwischen dem einen Rohrsystem zum anderen Rohrsystem mit Sicherheit den Dichtring mit der zylindrischen Schürze vorsehen. Die radial ausliegenden Teile des Dichtringes sind auf die Innenabmessungen des dickeren, schallgedämmten Rohrsystems abgestimmt, während die radial innenliegenden Konturen des Dichtringes auf den Außendurchmesser des dünneren, genormten Rohrsystems abgestimmt sind. Am axialen Ende der Schürze ist in zweckmäßiger Weise ein Bund vorgesehen, welcher ein Umspülen des eingeschobenen Rohrendes verhindert und ferner nachteiligen Ablagerungen im Verbindungsbereich entgegenwirkt.

Weiterbildungen und besondere Ausgestaltungen der Erfindung sind in den Unteransprüchen angegeben und ferner nachfolgend beschrieben.

Anhand der Zeichnung wird nachfolgend ein besonderes Ausführungsbeispiel der Erfindung näher erläutert. Es zeigen:
- Fig. 1: einen axialen Schnitt der Verbindungsanordnung für zwei unterschiedliche Rohrsysteme,
- Fig. 2: einen axialen Schnitt des Dichtringes.

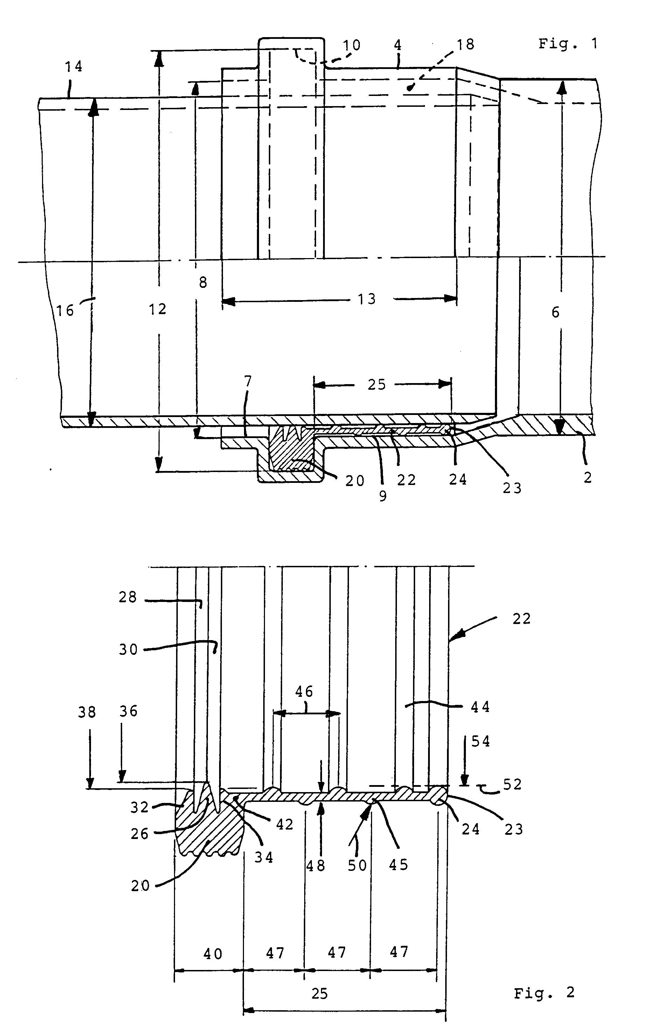

Fig. 1 zeigt in einem axialen Längsschnitt erstes ein Rohr 2 aus Kunststoff mit einer Muffe 4, wobei das erste Rohr 2 einen Außendurchmesser 6 aufweist. Das Rohr 2 ist ein schallgedämmtes Kunststoffrohr und der Außendurchmesser 16 ist größer als der Außendurchmesser von Kunststoffrohren nach DIN 19 561. Die Muffe 4 weist in ihrem Vorderteil 7 einen Innendurchmesser 8 auf, welcher gleich groß ist wie der Innendurchmesser des Innenteils 9 der Muffe. Zwischen dem Vorderteil 7 und dem Innenteil 9 der Muffe ist eine Sicke 10 vorgesehen, deren Innendurchmesser 12 ebenso wie der Innendurchmesser 8 im Vergleich mit genormten Muffen größer ist, da das schallgedämmte Kunststoffrohr 2 eine vergrößerte Wanddicke aufweist. Die Muffe 4 besteht ausschließlich aus dem relativ kurzen Vorderteil 7, der Sicke 10 und dem an die Sicke 10 axial unmittelbar anschließenden Innenteil 9, wobei die Muffe 4 eine axiale Gesamtlänge 13 aufweist. In die Muffe 4 ist ein Spitzende eines zweiten, insbesondere nach DIN 19 561 genormten Rohres 14 mit einem Außendurchmesser 16 eingeschoben. Bei dem dargestellten Übergang zwischen einem schallgedämmten Kunststoffrohr 2 und einem genormten Kunststoffrohr 14 ist folglich die Breite des Spaltes 18 zwischen der Innenfläche der Muffe 4 und der Außenfläche des zweiten Rohres 14 größer als bei einer Rohrleitung, welche ausschließlich aus genormten Rohren oder ausschließlich aus schallgedämmten Rohren aufgebaut ist.

Der Dichtring enthält zum einen im Bereich der Sicke 10 ein Dichtelement 20 und zum anderen im Bereich des genannten Spaltes 18 eine Schürze 22. Das Dichtelement 20 weist zweckmäßig im wesentlichen die gleiche Geometrie auf, wie das aus der eingangs erläuterten DE 39 06 997 C1 bekannte Dichtelement. Ferner kann aber im Rahmen der Erfindung das Dichtelement eine hiervon abweichende Kontur aufweisen, um im Bereich der Sicke 10 die Abdichtung zu erhalten. Unabhängig von der jeweiligen Ausführungsform ist der Außendurchmesser des Dichtelements 20 auf den vergrößerten Innendurchmesser der Sicke 10 abgestimmt, während der Innendurchmesser des Dichtelements 20 entsprechend dem Außendurchmesser 16 des genormten Rohres 14 ausgebildet ist. Die einteilig mit dem Dichtelement 20 ausgebildete Schürze 22 gewährleistet den fluchtgerechten Einbau der Rohre 2 und 14 der beiden unterschiedlich ausgebildeten Rohrsysteme. Die Schürze 22 weist an ihrem axialen Ende 23 einen Bund 24 auf, mittels welchem das Umspülen des Rohrendes verhindert wird und Ablagerungen im Bereich des Spaltes 18 und/oder der Sicke 10 entgegengewirkt wird. Die axiale Länge 25 der Schürze 22 ist um einen vorgegebenen Faktor kleiner als die Muffenlänge 13. Dieser Faktor liegt im Bereich zwischen 0,5 bis 0,75, bevorzugt zwischen 0,58 bis 0,68. Die Schürze 22 erstreckt sich über die gesamte axiale Länge des Muffeninnenteils 9, so daß dort praktisch keine unmittelbare Anlage des Rohrendes mit der Muffe möglich ist. Obgleich der Spalt zwischen dem Vorderteil 7 und dem Rohrende frei ist, findet auch dort praktisch keine Anlage zwischen dem Vorderteil 7 und dem Rohrende statt, da die Spaltbreite wesentlich größer ist als bei einem einzigen Rohrsystem und zudem im Bereich des Innenteiles mittels der Schürze ein Ausgleich und eine gute Zentrierung gewährleistet wird.

Aus der in Fig. 2 gezeigten Darstellung des Dichtringes ist dessen Geometrie gut zu erkennen. Das Dichtelement 20 weist eine zentrale Dichtlippe 26 auf, welche einen Querschnitt entsprechend einem gleichschenkligen Dreieck aufweist. Beabstandet und über zwei in axialer Richtung anschließende Zwischenräume 28, 30 sind zwei zusätzliche Lippen 32, 34 vorhanden. Der Innendurchmesser 36 der zentralen Dichtlippe 26 ist kleiner als der Innendurchmesser 38 der zusätzlichen Lippen 32, 34. Die zusätzliche Lippe 32 dient als Abstreiflippe, um Schmutz, Sand oder dergl., welche an dem einzuschiebenden Spitzende eventuell anhaften, abzustreifen und somit eine Beschädigung der zentralen Dichtlippe 26 oder gar eine Undichtigkeit zu unterbinden.

Die zylindrische Schürze 22 ist einteilig an das Dichtelement 20, und zwar insbesondere an die zusätzliche Lippe 34 angeformt. Die Schürze 22 weist die axiale Länge 25 auf, welche um einen vorgegebenen Faktor größer ist als die axiale Länge 40 des Dichtelements 20. Dieser Faktor liegt zweckmäßig im Bereich zwischen zwei bis vier und ist bevorzugt im wesentlichen drei groß. Zwischen dem eigentlichen Dichtelement und der ringförmigen, im wesentlichen zylindrisch ausgebildeten Schürze 22 ist somit ein vergleichsweise breiter Übergangsbereich 42 vorhanden. Die Schürze 22 gewährleistet einen fluchtgerechten Einbau des Spitzendes in die Muffe mit vergößertem Innendurchmesser. Zwischen dem am freien Ende 23 vorgesehenen Bund 24 und dem Dichtelement 20 weist die zylindrische Schürze 22 radial nach innen gerichtete Wulste 44 und radial nach außen gerichtete Wulste 45 auf. Wie ersichtlich, sind die inneren und äußeren Wulste 44, 45 in axialer Richtung versetzt zueinander angeordnet, sodaß auch problemlos vergleichsweise große Toleranzbereiche der Spaltbreite zwischen der Außenfläche des Spitzendes und der Innenfläche der Muffe ausgeglichen werden können. Der Bund 24 und die Wulste 44, 45 weisen im wesentlichen den gleichen Radius auf. Die axialen Abstände 46 zwischen den innenliegenden Wulsten 44 und ebenso die axialen Abstände 47 zwischen den außenliegenden Wülsten 45 sind untereinander im wesentlichen gleich groß und entsprechen bevorzugt der axialen Länge 40 des Dichtelements 20.

Die zylindrische Schürze 22 besitzt, abgesehen von den ringförmigen Wülsten 44, 45, eine Dicke 48, welche beispielsweise für eine Nennweite DN 70 1 mm groß ist. Die ringförmigen Wulste 44, 45 und ebenso der Bund 24 weisen den Radius 50 auf, welcher im wesentlichen gleich groß ist wie die genannte Dicke 48. Die Spitzen der zusätzlichen Lippen 32, 44 liegen ebenso wie die am weitesten radial nach innen gerichteten Teile der Wulste 44 sowie des Bundes 24 in zweckmäßiger Weise auf einer gemeinsamen Zylindermantelfläche 52 mit einem Innendurchmesser 54. Der Innendurchmesser 54 der Mantelfläche 52 ist ebenso wie der Innendurchmesser 38 der zusätzlichen Lippen 32, 34 um einen vorgegebenen Faktor größer als der Innendurchmesser 36 der zentralen Dichtlippe. Die zusätzlichen Lippen 32, 34 und ebenso die radial innenliegenden ringförmigen Wulste 44 sind keine Dichtlippen und erfüllen praktisch keine Dichtfunktion, sondern sie dienen im Rahmen dieser Erfindung zum Ausgleich der Durchmesserdifferenzen der beiden unterschiedlichen Rohrsysteme. Bei der hier dargestellten zweckmäßigen Ausführungsform sind zwei äußere Wulste 45 äquidistant zwischen dem Bund 24 und dem Dichtelement 20 angeordnet. Die drei inneren Wulste 44 sind untereinander gleichfalls äquidistant angeordnet, liegen jedoch mittig versetzt bezüglich den beiden äußeren Wulsten 45.

### Bezugszeichen

- 2: Rohr
- 4: Muffe
- 6: Außendurchmesser von 2
- 7: Vorderteil von 4
- 8: Innendurchmesser von 4
- 9: Innenteil von 4
- 10: Sicke
- 12: Innendurchmesser von 10
- 13: Länge von 4
- 14: zweites Rohr
- 16: Außendurchmesser von 14
- 18: Spalt
- 20: Dichtelement
- 22: Schürze
- 23: Ende von 22
- 24: Bund
- 25: Länge von 22
- 26: zentrale Dichtlippe
- 28, 30: Zwischenraum
- 32, 34: zusätzliche Lippe
- 36: Innendurchmesser von 26
- 38: Innendurchmesser von 32, 34
- 40: Länge von 20
- 42: Übergangsbereich
- 44, 45: Wulst
- 46, 47: axialer Abstand
- 48: Dicke von 22
- 50: Radius
- 52: Mantelfläche
- 54: Innendurchmesser

## Patentansprüche

1. Verwendung einer Verbindungsanordnung einer Rohrleitung, insbesondere aus Kunststoff, mit einem ersten Rohr (2) oder Formteil, welches eine Muffe (4) mit einer Sicke (10) aufweist, mit einem zweiten Rohr (14) oder Formteil, dessen Spitzende in die Muffe (4) einschiebbar ist, und mit einem in der Sicke angeordneten Dichtelement (20), dessen Dichtlippe (26) am Spitzende dichtend anliegt und mit welchem eine ringförmige Schütte (22) verbunden ist, welche außerhalb der Sicke (10) in einem Spalt (18) zwischen der Innenfläche der Muffe (4) und der Außenfläche des eingeschobenen Spitzendes angeordnet ist und an ihrer Innenfläche wenigstens einen Wulst (44) aufweist, im Übergangsbereich von zwei unterschiedlichen Rohrsystemen, wobei das erste Rohrsystem die Muffe (4) enthält und größere Innendurchmesser und/oder Wanddicken als das zweite Rohrsystem aufweist, welches das Spitzende enthält, wobei die Außendurchmesser des Dichtelements (20) und der Schürze (22) auf die Innendurchmesser des ersten Rohrsystems und ferner die Innendurchmesser des Dichtelements (20) und der Schürze (22) auf die Außendurchmesser des zweiten Rohrsystems abgestimmt sind und wobei der radial innenliegende Wulst (44) einen Innendurchmesser (54) aufweist, welcher größer ist als der Innendurchmesser (36) der Dichtlippe (26).

2. Verwendung einer Verbindungsanordnung nach Anspruch 1, dadurch gekennzeichnet, daß die Schürze (22) im wesentlichen zylindrisch ausgebildet ist und daß die an ihrer Innenfläche und/oder Außenfläche angeordneten Wulste (44, 45), welche bevorzugt äquidistand zueinander angeordnet sind, ringförmig ausgebildet sind.

3. Verwendung einer Verbindungsanordnung nach Anspruch 1 oder 2, dadurch gekennzeichnet, daß das Dichtelement (20) eine zusätzliche Lippe (32) enthält, welche als Abstreiflippe wirksam ist und ebenso wie der radial innenliegende Wulst (44) bis an eine gemeinsame zylindrische Mantelfläche (52) heranreicht.

4. Verwendung einer Verbindungsanordnung nach einem der Ansprüche 1 bis 3, dadurch gekennzeichnet, daß die Schürze (22) eine Länge (25) aufweist, welche um einen vorgegebenen Faktor kleiner ist als die Gesamtlänge (13) der Muffe (4), wobei dieser Faktor bevorzugt zwischen 0,5 bis 0,75 und insbesondere zwischen 0,58 bis 0,68 groß ist.

5. Verwendung einer Verbindungsanordnung nach einem der Ansprüche 1 bis 4, dadurch gekennzeichnet, daß die Schürze (22) sich im wesentlichen über die gesamte axiale Länge des Spaltes (18) erstreckt, welcher zwischen dem unmittelbar an die Sicke (10) anschließenden Innenteil (9) der Muffe (4) und der Außenfläche des eingeschobenen Spitzendes vorhanden ist.

6. Verwendung einer Verbindungsanordnung nach einem der Ansprüche 1 bis 5, dadurch gekennzeichnet, daß die Schürze (22) an ihrem freien Ende einen ringförmigen Bund (24) aufweist, dessen radiale Breite größer ist als die Breite des Spaltes (18) unter Berücksichtigung der Fertigungstoleranzen einerseits der Muffe (4) und andererseits des zweiten Rohres (14).

7. Verwendung einer Verbindungsanordnung nach einem der Ansprüche 1 bis 6, dadurch gekennzeichnet, daß die Muffe (4) dem ersten Rohrsystem für insbesondere schallgedämmte Rohre mit vergrößerten Wanddicken und das Spitzende des einzuschiebenden Rohres (14) dem zweiten Rohrsystem zugeordnet ist, welches insbesondere nach DIN 19 561 genormt ist.

8. Verwendung einer Verbindungsanordnung nach einem der Ansprüche 1 bis 7, dadurch gekennzeichnet, daß die Wulste (44) der Innenfläche bezüglich den Wulsten (45) der Außenfläche axial beabstandet, insbesondere jeweils mittig versetzt, angeordnet sind und/oder daß die axialen Abstände (46,47) im wesentlichen gleich groß sind wie die axiale Länge (40) des Dichtelements (20) und/oder daß die Schürze (22) auf ihrer Innenfläche drei ringförmige Wulste (44) und auf ihrer Außenfläche zwei ringförmige Wulste (45) aufweist, wobei letztere axial versetzt zwischen den an der Innenfläche liegenden Wulsten (44) angeordnet sind.

9. Verwendung einer Verbindungsanordnung nach einem der Ansprüche 1 bis 8, dadurch gekennzeichnet, daß die Wulste (44,45) und/oder der Bund (24) einen Radius (50) und die Schürze (22) eine radiale Dicke (48) aufweisen, wobei das Verhältnis des Radius (50) zur Dicke (48) zweckmäßig zwischen 0,8 bis 1,2 und bevorzugt im wesentlichen 1 groß ist, wobei der Radius (50) bevorzugt auf einen Mittelpunkt bezogen ist, welcher im wesentlichen in der Mitte der Schichtdicke (48) liegt.

10. Verwendung einer Verbindungsanordnung nach einem der Ansprüche 1 bis 9, dadurch gekennzeichnet, daß die Schürze (22) eine Länge (25) aufweist, welche um einen vorgegebenen Faktor größer ist als die Länge (40) des Dichtelements (20), wobei dieser Faktor im Bereich zwischen 2 bis 4, bevorzugt zwischen 2,5 und 3,5, im wesentlichen 3 groß ist.

## Claims

1. Use of a connection arrangement for a pipeline, in particular made of plastic, comprising a first pipe (2) or shaped part having a sleeve (4) with a bead (10), a second pipe (14) or shaped part, the spigot end of which can be inserted into the sleeve (4), and a sealing element (20) arranged in the bead, the sealing lip (26) of which bears in a sealed manner against the spigot end and to which an annular apron (22) arranged outside the bead (10) in a gap (18) between the inner face of the sleeve (4) and the outer face of the inserted spigot end and provided on its inner face with at least one bulge (44) is connected, in the transition region between two different pipe systems, the first pipe system including the sleeve (4) and having a larger internal diameter and/or wall thicknesses than the second pipe system including the spigot end, the external diameter of the sealing element (20) and the apron (22) being adapted to the internal diameter of the first pipe system and furthermore the internal diameter of the sealing element (20) and the apron (22) being adapted to the external diameter of the second pipe system and the radially internal bulge (44) having an internal diameter (54) which is greater than the internal diameter (36) of the sealing lip (26).

2. Use of a connection arrangement according to claim 1, characterised in that the apron (22) is essentially cylindrical and that the bulges (44, 45) arranged on its inner face and/or outer face, which are preferably arranged equidistantly from one another, are annular.

3. Use of a connection arrangement according to claim 1 or claim 2, characterised in that the sealing element (20) includes an additional lip (32) which acts as a stripping lip and, like the radially internal bulge (44), extends as far as a common cylindrical surface (52).

4. Use of a connection arrangement according to one of claims 1 to 3, characterised in that the apron (22) has a length (25) which is smaller than the overall length (13) of the sleeve (4) by a predetermined factor, this factor preferably being between 0.5 and 0.75 and, in particular, between 0.58 and 0.68.

5. Use of a connection arrangement according to one of claims 1 to 4, characterised in that the apron (22) extends essentially over the entire axial length of the gap (18) present between the inner part (9) of the sleeve (4) directly adjacent to the bead (10) and the outer face of the inserted spigot end.

6. Use of a connection arrangement according to one of claims 1 to 5, characterised in that the apron (22) is provided at its free end with an annular collar (24), the radial width of which is greater than the width of the gap (18), taking account of the manufacturing tolerances of the sleeve (4), on the one hand, and, on the other hand, of the second pipe (14).

7. Use of a connection arrangement according to one of claims 1 to 6, characterised in that the sleeve (4) is associated with the first pipe system for, in particular, sound-insulated pipes with increased wall thicknesses and the spigot end of the pipe (14) to be inserted is associated with the second pipe system which is standardised, in particular, in accordance with DIN 19 561.

8. Use of a connection arrangement according to one of claims 1 to 7, characterised in that the bulges (44) of the inner face are arranged at an axial distance from the bulges (45) of the outer face, in particular in a centrally offset manner, and/or that the axial spacings (46, 47) are essentially identical to the axial length (40) of the sealing element (20) and/or that the apron (22) is provided on its inner face with three annular bulges (44) and on its outer face with two annular bulges (45), the latter being arranged in an axially offset manner between the bulges (44) situated on the inner face.

9. Use of a connection arrangement according to one of claims 1 to 8, characterised in that the bulges (44, 45) and/or the collar (24) have a radius (50) and the apron (22) has a radial thickness (48), the ratio between the radius (50) and the thickness (48) advantageously being between 0.8 and 1.2 and preferably essentially being equal to 1, the radius (50) preferably being in relation to a centre point situated essentially in the centre of the layer thickness (48).

10. Use of a connection arrangement according to one of claims 1 to 9, characterised in that the apron (22) has a length (25) which is greater than the length (40) of the sealing element (20) by a predetermined factor, this factor being in the region of between 2 and 4, preferably between 2.5 and 3.5, essentially equal to 3.

## Revendications

1. Utilisation d'un dispositif de raccordement d'un tuyau, en particulier en matière synthétique, comprenant un premier tuyau (2) ou pièce moulée, lequel présente un manchon (4) avec une moulure (10), un deuxième tuyau (14) ou pièce moulée, dont l'extrémité de bout s'enfonce dans le manchon (4), et un élément d'étanchéité (20) placé dans la moulure, élément dont la lèvre d'étanchéité (26) repose de manière étanche contre l'extrémité de bout et auquel est relié un tablier annulaire (22), lequel est placé à l'extérieur de la moulure (10) dans une fente (18) entre la surface intérieure du manchon (4) et la surface extérieure de l'extrémité de bout enfoncée et présente sur sa surface intérieure au moins un bourrelet (44), dans la zone de raccordement de deux systèmes de tuyauterie différents, le premier système de tuyauterie contenant le manchon (4) et présentant un diamètre intérieur et/ou des épaisseurs de paroi supérieurs au deuxième système de tuyauterie, lequel contient l'extrémité de bout, le diamètre extérieur de l'élément d'étanchéité (20) et du tablier (22) étant ajustés au diamètre intérieur du premier système de tuyauterie et de plus le diamètre intérieur de l'élément d'étanchéité (20) et du tablier (22) étant ajustés au diamètre extérieur du deuxième système de tuyauterie, et le bourrelet (44) situé à l'intérieur dans le sens radial présentant un diamètre intérieur (54) qui est supérieur au diamètre intérieur (36) de la lèvre d'étanchéité (26).

2. Utilisation d'un dispositif de raccordement selon la Revendication 1, ***caractérisé en ce que*** le tablier (22) a une conformation pour l'essentiel cylindrique et ***en ce que*** les bourrelets (44, 45) placés sur sa surface intérieure et/ou extérieure, lesquels sont placés de préférence à équidistance les uns des autres, ont une conformation annulaire.

3. Utilisation d'un dispositif de raccordement selon la Revendication 1 ou 3, ***caractérisé en ce que*** l'élément d'étanchéité (20) contient une lèvre supplémentaire (32) qui est active comme lèvre de raclage et, tout comme le bourrelet (44) situé à l'intérieur dans le sens radial, arrive jusqu'à une surface d'enveloppe cylindrique commune (52).

4. Utilisation d'un dispositif de raccordement selon l'une des Revendications 1 à 3, ***caractérisé en ce que*** le tablier (22) présente une longueur (25) qui est inférieure d'un facteur prédéterminé à la longueur totale (13) du manchon (4), ce facteur calant de préférence entre 0,5 et 0,75 et en particulier entre 0,58 et 0,68.

5. Utilisation d'un dispositif de raccordement selon l'une des Revendications 1 à 4, ***caractérisé en ce que*** le tablier (22) s'étend pour l'essentiel sur toute la longueur axiale de la fente (18), laquelle est présente entre la partie intérieure (9) du manchon (4) située immédiatement à la suite de la moulure (10) et la surface extérieure de l'extrémité de bout enfoncée.

6. Utilisation d'un dispositif de raccordement selon l'une des Revendications 1 à 5, ***caractérisé en ce que*** le tablier (22) présente à son extrémité libre une collerette (24), dont la largeur radiale est supérieure à la largeur de la fente (18) en tenant compte des tolérances de fabrication d'une part du manchon (4) et d'autre part du deuxième tuyau (14).

7. Utilisation d'un dispositif de raccordement selon l'une des Revendications 1 à 6, ***caractérisé en ce que*** le manchon (4) est associé au premier système de tuyauterie en particulier pour des tuyaux à isolation phonique à épaisseur de parois augmentée et l'extrémité de bout du tuyau (14) à enfoncer est associée au deuxième système de tuyauterie, lequel est normalisé en particulier selon la norme DIN 19 561.

8. Utilisation d'un dispositif de raccordement selon l'une des Revendications 1 à 7, ***caractérisé en ce que*** les bourrelets (44) de la surface intérieure sont placés à distance axiale des bourrelets (45) de la surface extérieure, en particulier à chaque fois avec un décalage médian, et/ou ***en ce que*** les espacements axiaux (46, 47) sont sensiblement aussi grands que la longueur axiale (40) de l'élément d'étanchéité (20) et/ou ***en ce que*** le tablier (22) présente sur sa surface intérieure trois bourrelets annulaires (44) et sur sa surface extérieure deux bourrelets annulaires (45), ces derniers étant décalés dans le sens axial entre les bourrelets (44) situés sur la surface intérieure.

9. Utilisation d'un dispositif de raccordement selon l'une des Revendications 1 à 8, ***caractérisé en ce que*** les bourrelets (44, 45) et/ou la collerette (24) présentent un rayon (50) et le tablier présente une épaisseur radiale (48), le rapport du rayon (50) à l'épaisseur (48) étant avantageusement compris entre 0,8 et 1,2 et de préférence sensiblement égal à 1, le rayon (50) se rapportant de préférence à un point central qui est situé sensiblement au milieu de l'épaisseur de couche (48).

10. Utilisation d'un dispositif de raccordement selon l'une des Revendications 1 à 9, ***caractérisé en ce que*** le tablier (22) présente une longueur (25) qui est supérieure d'un facteur prédéterminé à la longueur (40) de l'élément d'étanchéité (20), ce facteur étant compris entre 2 et 4, de préférence entre 2,5 et 3,5, et sensiblement égal à 3.
